# NEW EUROPEAN PATENT SPECIFICATION

(11) **EP 0 352 380 B2**
(45) Date of publication and mention of the opposition decision: **07.02.1996**
(45) Mention of the grant of the patent: 31.03.1993
(21) Application number: 88306899.1
(22) Date of filing: 27.07.1988
(51) Int. Cl.: B60B 33/02

(54) **Castor**
Lenkrolle
Roue à pivot

(43) Date of publication of application: 31.01.1990
(73) Proprietor: BRITISH CASTORS LIMITED, West Bromwich, West Midlands B70 OUA (GB)
(72) Inventor: Verhaeg, John, Kingswinford, West Midlands, DY6 7RU (US)
(74) Representative: Harrison, Gordon Donald

(56) References cited:
- DE-A- 1 580 179
- DE-A- 3 243 211
- DE-B- 1 228 768
- DE-B- 1 303 706
- DE-B- 1 505 759
- DE-U- 1 932 802
- DE-U- 7 203 502
- DE-U- 7 439 939
- DE-U- 8 217 977
- GB-A- 2 047 364
- GB-A- 2 200 042
- US-A- 2 900 659
- US-A- 4 349 937

## Description

The present invention relates to a castor comprising a body, a wheel mounted for rotation relative to the body about a rolling axis, an attachment member connected with the body for swivelling relative thereto about a swivel axis which is transverse to and is offset from the rolling axis and braking means for braking rotation of the wheel and swivelling of the body relative to the attachment member.

GB 2047364A discloses a castor of this kind in which the braking means includes a wedge lying in a tapered gap between a periphery of the wheel and the underside of the attachment member. The wedge is guided for movement relative to the body of the castor in a direction perpendicular to the swivel axis and a foot pedal is provided for drawing the wedge towards the narrow part of the gap. The wedge has upstanding teeth for cooperation with the periphery of the attachment member so that swiveling of the body relative to the attachment member can be restrained by friction between the teeth and the attachment member. A leaf spring is also mounted in the tapered gap to lie between the brake element and the wheel. When the brake element is moved towards the narrow part of the gap, this spring is deflected until it bears on the periphery of the wheel. Friction between the leaf spring and the wheel restrains rotation of the wheel relative to the body.

A disadvantage of the arrangement described in GB 2047364A is that it is difficult or impossible to ensure that exactly the same travel of the brake element will be required to establish sufficient friction between the teeth of the brake element and the attachment member to prevent swiveling and also sufficient friction between the leaf spring and the wheel to prevent turning of the wheel. Even if this condition is satisfied when the castor has been manufactured but has not been used, wear which occurs during use is likely to prevent the condition being satisfied throughout the service life of the castor.

A castor according to the present invention is described in Claim 1.

The interfering element can conveniently be arranged to engage with the underside of the attachment member. Both the attachment member and the interfering element may be provided with teeth which cooperate to interfere with swivelling of the castor body relative to the attachment member.

An example of a castor embodying the invention will now be described, with reference to the accompanying drawings, wherein:
FIGURE 1 shows diagrammatically a side elevation of the castor with certain parts broken away and the castor being in a condition in which the wheel is free to rotate relative to the body and the body is free to swivel relative to the attachment member; and
FIGURE 2 is a view similar to Figure 1 but showing the castor in a condition in which rotation of the wheel and swivelling of the body are both restrained.

The castor comprises a wheel 10 mounted for rotation about a rolling axis 11 on a body 12. The body comprises an upper portion 13 and a pair of spaced limbs, one only of which is shown at 14, extending downwardly from the upper portion at opposite sides of the wheel. The limbs carry an axle provided with bearings for supporting the wheel. The general arrangement of the body, wheel, axle and bearings may be a known arrangement.

The castor further comprises an attachment member 16 which, in use, is fixed with respect to a container or other article to be provided with castors. The attachment member comprises an upper element 17 of plate-like form defining near to its periphery apertures to receive bolts or other fasteners, by means of which the castor can be secured to the article. The attachment member further comprises a lower element 18 which is circular, has a diameter considerably less than the corresponding dimension of the upper element 17 and is secured to the upper element by means of a rivet 19. The lower element 18 extends through an aperture defined by the upper portion 13 of the body and overlaps with the body at the underside of the upper portion 13, so that the body is trapped between the elements 17 and 18. As shown, a first set of bearing elements is interposed between the body and the upper element 17 and a second set of bearing elements is interposed between the body and the lower element 18. The body 12 is thereby connected with the attachment member 16 for swiveling relative thereto about a swivel axis 20 which is offset from and is perpendicular to the rolling axis 11.

There is between the peripheral face of the wheel 10 and the underside of the attachment member 16 a tapering gap 21 which is intersected by the swivelling axis 20. A brake element 22 is arranged to lie at least partly in this gap and is supported for movement relative to the body 12 along a path which extends along the gap 21 in a direction transverse to both the swivelling axis 20 and the rolling axis 11. This path may be rectilinear or curved. In the particular example illustrated, the path of movement of the brake element 22 is an arc of a circle centered on the rolling axis 11.

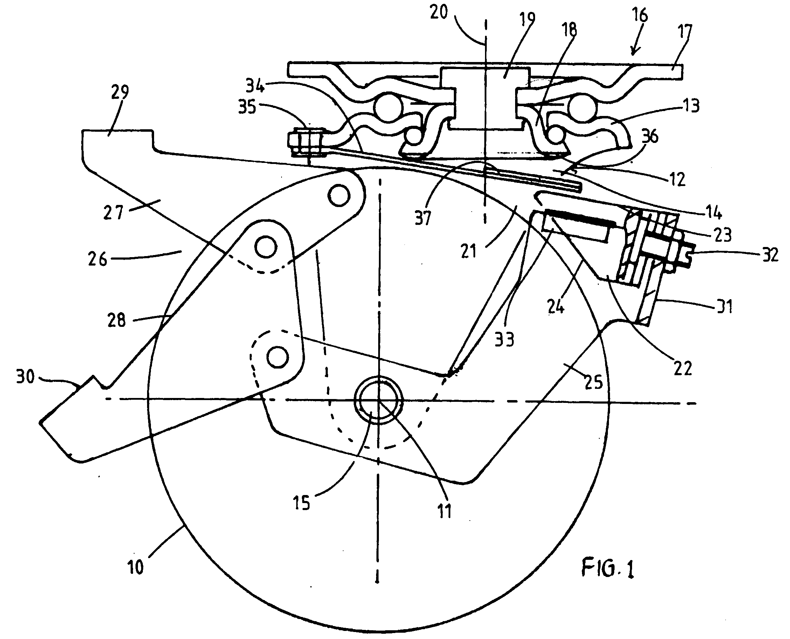

The brake element 22 is wedge-shaped, having an upper surface 23 which faces towards the attachment member 16 and a lower surface 24 which faces towards the wheel 10 and is convergent with the surface 23. As shown in Figure 1, when the brake element is at one end of its path of travel, there is a clearance space between the surface 24 and the wheel and the upper surface 23 is spaced considerably from the attachment member 16.

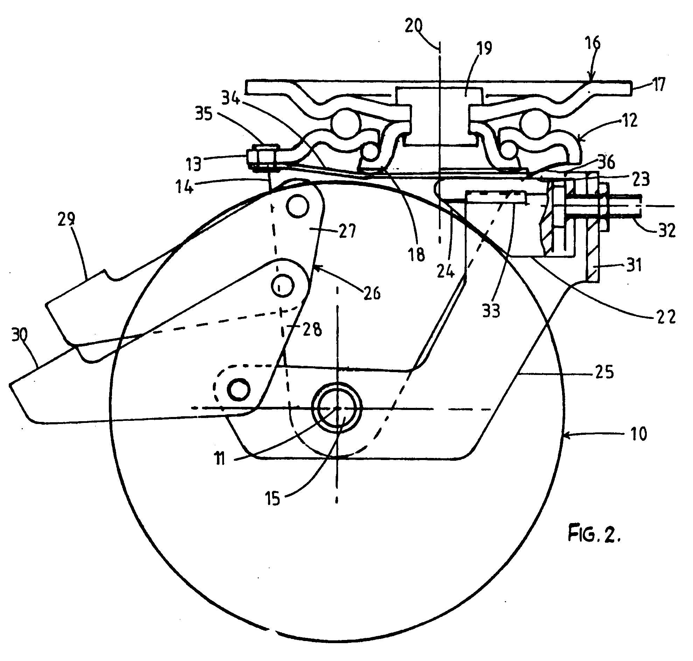

The brake element 22 is carried by an arm 25 connected with the body 12 for pivoting relative thereto. In the example illustrated, the pivot axis of the arm 25 coincides with the rolling axis 11. Alternatively, the pivot axis of the arm may be spaced from and parallel to the rolling axis. A first portion of the arm 25 extends from its pivot axis in one direction and carries the brake element. A second portion of the arm extends from the pivot axis in the opposite direction and is connected by a linkage 26 with the body 12. The linkage 26 is a toggle linkage and comprises a first element 27 pivotally connected with the body and with a second element 28 of the linkage which is pivotally connected with the arm 25. As shown in Figure 2, the pivotal connection between the elements 27 and 28 can be moved from a position at one side of a rectilinear line joining the axis of the pivotal connection between the body and the element 27 with the axis of the pivotal connection between the arm and the element 28 to a position at the opposite side of that line, such movement of the toggle linkage causing the arm to pivot in an anti-clockwise direction, as viewed in the drawings. The elements 27 and 28 are provided with respective abutments which engage each other when the elements are in the position illustrated in Figure 2, to limit pivoting of the arm 25.

The element 27 is provided with a foot pedal 29 which can be depressed when the linkage 26 is in the position shown in Figure 1 to set the linkage in the position of Figure 2. The element 28 includea foot pedal 30 which can be depressed to return the linkage from the position illustrated in Figure 2 to the position of Figure 1. The elements 27 and 28 and the arm 25 each preferably comprises a pair of limbs disposed at opposite sides of the wheel 10. The pedals 29 and 30 extend between the limbs of the elements 27 and 28 respectively and the brake element 22 lies between the limbs of the arm 25.

The limbs of the arm 25 are connected to each other adjacent to the brake element 22 by a web 31. Adjustment means is provided for adjusting the position of the brake element relative to this web. In the example illustrated, the adjustment means comprises a screw and nut mechanism, the screw 32 of which can be turned to move the brake element towards and away from the web 31 and so vary the distance between the brake element 22 and the swivel axis 20, when the linkage 26 is in the position shown in Figure 1. The position of the brake element may be adjusted initially to compensate for manufacturing tolerances and during the service life of the castor to compensate for wear of components of the castor.

The brake element is further connected with the arm 25 by a resilient element 33 which, in the example illustrated, is a leaf spring. The leaf spring biases the brake element to the position shown in Figure 1 but can flex to permit limited movement of the brake element relative to the arm 25 towards and away from the attachment member 16. The leaf spring ensures that the brake element remains clear of the wheel 10 when the linkage 26 is in the position of Figure 1.

The castor further comprises an interfering element 34 which is connected with the body 12 for swivelling with the body relative to the attachment member 16. The interfering element lies generally below the attachment member, above the wheel and between the limbs of the body 12. An end portion of the interfering element is fixed by rivets 35 to the upper portion 13 of the body at a position remote from the swivel axis 20. The interfering element extends from the rivets 35 around the swivel axis to overlap the entire lower element 18, as viewed along the swivel axis. An annular row of teeth 36 is formed on the lower element 18, these teeth being presented towards the interfering element. An arcuate row of complimentary teeth 37 is formed on the interfering element and presented upwardly for cooperation with the teeth 36. The row of teeth 37 is movable into and out of engagement with corresponding ones of the teeth 36 by flexing of the interfering element 34. Preferably, this element is formed as a leaf-spring and may be formed of spring steel.

When the linkage 26 is in the position of Figure 1, the teeth 37 are spaced downwardly from the teeth 36. A portion of the interfering element which is not formed with teeth may engage the lower element 18 at a position between the rivets 35 and the teeth 37. When the brake element 22 is moved further into the gap 21 by movement of the linkage 26 into the position of Figure 2, the upper surface 23 of the brake element bears against the interfering element 34 and causes flexing of the interfering element until the teeth 37 are enmeshed with teeth 36. Further flexing of the interfering element is then prevented by the attachment member 16. If this occurs before pivoting of the arm 25 has been completed, the leaf spring 33 then flexs to permit pivoting of the arm 25 towards the attachment number 16 whilst the brake element 22 is deflected from its arcuate path to move in a direction perpendicular to the swivel axis 20. Such movement increases the pressure under which the brake element engages the wheel 10. Generally, the lower surface 24 of the brake element will engage the peripheral surface of the wheel before the teeth 37 are fully enmeshed with the teeth 36. However, the peripheral surface of the wheel 10 is generally presented by a tyre capable of deforming under pressure.

It will be appreciated that the linkage 26 may be substituted by an alternative linkage for pivoting the arm 25 relative to the body 12. Such linkage may, for example, have only a single foot pedal. Furthermore, the linkage may be adapted for remote operation.

It will be noted that the castor has a single wheel. It will also be appreciated that a single tooth 37 may be provided on the interfering element 34. However, a row of such teeth is preferred to provide more reliable restraint of swivelling and to reduce the risk of damage being caused to the teeth.

## Claims

1. A castor comprising a body (12), a wheel (10) mounted for rotation relative to the body about a rolling axis (11), an attachment member (16) connected with the body for swivelling relative thereto about a swivel axis (20) which is transverse to and is offset from the rolling axis and braking means for braking rotation of the wheel and swivelling of the body relative to the attachment member, wherein there is between a peripheral face of the wheel and a lower face of the attachment member a tapering gap (21) and wherein the braking means comprises a brake element (22) which lies at least partly in said gap and actuating means (25, 27, 28) for moving the brake element along a path which extends transversely of both the swivel axis and the rolling axis,
the castor being characterised in that
the braking means further includes an interfering element (34) which is interposed between the brake element (22) and the attachment member (16), said interfering element (34) being connected with the body (12) for swivelling with the body relative to the attachment member (16) and being movable by means of the brake element (22) relative to the attachment member (16) and the body (12) to an interfering position in which the interfering element (34) engages the attachment member (16) and interferes with swivelling of the body (12) relative to the attachment member (16);
and in that
the actuating means includes an arm (25) arranged for pivoting relative to the body (12) about an arm axis and having the brake element (22) connected with the arm (25) by resiliently deformable connecting means (33) whereby the interfering element (34) may engage the attachment member (16) in said interfering position without limiting the movement of the brake element (22) along said path.

2. A castor as claimed in Claim 1 further characterised in that there is provided adjustment means (32) for enabling the position of the brake element relative to the actuating means to be adjusted.

3. A castor as claimed in either one of Claims 1 or 2 further characterised in that a linkage (27, 28) is connected between the body (12) and the arm (25), the linkage being in a selected one of a "brake on" condition, in which the linkage and arm hold the brake element in braking relation with the wheel, and a "brake-off' position in which the linkage and the arm permit the brake element to move out of braking relation with the wheel.

4. A castor as claimed in any one of the preceding claims further characterised in that the interfering element (34) has an arcuate row of teeth (37) and the attachment member (16) has one or more teeth (36) engageable with teeth of the arcuate row when the interfering element is in the interfering position.

5. A castor as claimed in any one of the preceding claims further characterised in that the interfering element (34) is resiliently flexible, relative to the body.

6. A castor as claimed in any one of the preceding claims further characterised in that the interfering element (34) is attached to the body (12) at a position spaced from the swivel axis (20) in one direction and has teeth (37) spaced from the swivel axis in an opposite direction.

## Patentansprüche

1. Laufrolle mit einem Grundkörper (12), einem zur Drehung relativ zum Grundkörper um eine Rollachse (11) gehaltenen Rad (10), einem Befestigungsteil (16), das mit dem Grundkörper zum verschwenken relativ zu diesem um eine Schwenkachse (20) verbunden ist, welche quer und mit Abstand zur Rollachse verläuft, und einem Bremsmittel zum Bremsen der Drehung des Rades und des Verschwenkens des Grundkörpers relativ zum Befestigungsteil, wobei zwischen einer Umfangsseite des Rades und einer Unterseite des Befestigungsteils ein schmal zulaufender Spalt (21) liegt und wobei das Bremsmittel ein Bremselement (22), das zumindest teilweise in besagtem Spalt liegt, und ein Betätigungsmittel (25, 27, 28) zum Bewegen des Bremselementes entlang eines Weges, der sowohl zur Schwenkachse als auch zur Drehachse quer verläuft, aufweist, dadurch gekennzeichnet, daß das Bremsmittel ein Eingreifelement (34) umfaßt, das zwischen dem Bremselement (22) und dem Befestigungsteil (16) eingefügt ist, wobei das besagte Eingreifelement (34) mit dem Grundkörper (12) zum Verschwenken mit dem Grundkörper relativ zum Befestigungsteil (16) verbunden und mittels des Bremselements (22) relativ zum Befestigungsteil (16) und zum Grundkörper (12) in eine Eingreifstellung beweglich ist, in der das Eingreifelement (34) mit dem Befestigungsteil (16) zusammenwirkt und das Verschwenken des Grundkörpers (12) relativ zum Befestigungsteil (16) hindert; und dadurch, daß das Betätigungsmittel einen Arm (25) einschließt, der zum Verschwenken relativ zum Grundkörper (12) um eine Armachse angeordnet ist, und bei dem das Bremselement (22) durch ein elastisch verformbares Verbindungsmittel (33) mit dem Arm (25) verbunden ist, wodurch das Eingreifelement (34) das Befestigungsteil (16) in der besagten Eingreifstellung erfassen kann, ohne daß die Bewegung des Bremselements (22) längs des genannten Wegs begrenzt wird.

2. Laufrolle nach Anspruch 1, gekennzeichnet durch ein Einstellmittel (32), um die Einstellung der Position des Bremselements relativ zum Betätigungsmittel zu ermöglichen.

3. Laufrolle nach Anspruch 1 oder 2, dadurch gekennzeichnet, daß eine Kopplung (27, 28) zwischen dem Grundkörper (12) und dem Arm (25) angeschlossen ist, wobei sich die Kopplung wahlweise in einem "Bremse fest"-Zustand in dem die Kopplung und der Arm das Bremselement in einer bremsenden Verbindung mit dem Rad halten, oder einem "Bremse los"-Zustand, in dem die Kopplung und der Arm zulassen, daß sich das Bremselement von der bremsenden Verbindung mit dem Rad wegbewegt, befindet.

4. Laufrolle nach einem der vorangehenden Ansprüche, dadurch gekennzeichnet, daß das Eingreifelement (34) eine bogenförmige Zahnreihe (37) und das Befestigungsteil (16) einen oder mehrere Zähne (36) aufweist, die in Zähne der gewölbten Reihe eingreifen können, wenn das Eingreifelement in der Eingreifstellung ist.

5. Laufrolle nach einem der vorangehenden Ansprüche dadurch gekennzeichnet, daß das Eingreifelement (34) relativ zum Grundkörper elastisch flexibel ist.

6. Laufrolle nach einem der vorangehenden Ansprüche, dadurch gekennzeichnet, daß das Eingreifelement (34) in einer Richtung mit Abstand von der Schwenkachse (20) am Grundkörper (12) befestigt ist und Zähne (37) hat, die in einer entgegengesetzten Richtung einen Abstand von der Schwenkachse aufweisen.

## Revendications

1. Roulette comportant un corps (12), une roue (10) montée de façon à tourner par rapport au corps autour d'un axe de roulement (11), un élément de fixation (16) relié au corps afin de pivoter par rapport à celui-ci autour d'un axe de pivotement (20) qui est transversal à et décalé par rapport à l'axe de roulement et des moyens de freinage destinés à freiner la rotation de la roue et le pivotement du corps par rapport à l'élément de fixation, dans laquelle il y a un espace en forme de coin (21) entre une face périphérique de la roue et une face inférieure de l'élément de fixation et dans laquelle les moyens de freinage comportent un élément de freinage (22) qui s'étend au moins partiellement dans ledit espace et des moyens d'actionnement (25,27,28) destinés à déplacer l'élément de freinage le long d'une trajectoire qui s'étend transversalement à l'axe de pivotement ainsi qu'à l'axe de roulement, la roulette étant caractérisée en ce que les moyens de freinage comportent en outre un élément intermédiaire (34) qui est interposé entre l'élément de freinage (22) et l'élément de fixation (16), ledit élément intermédiaire (34) étant relié au corps (12) afin de pivoter avec le corps par rapport à l'élément de fixation (16) et étant mobile au moyen de l'élément de freinage (22) par rapport à l'élément de fixation (16) et au corps (12) dans une position intermédiaire dans laquelle l'élément intermédiaire (34) vient en prise avec l'élément de fixation (16) et empêche le pivotement du corps (12) par rapport à l'élément de fixation (16) ; et en ce que les moyens d'actionnement comprennent un bras (25) adapté à pivoter par rapport au corps (12) autour d'un axe dit de bras et ayant l'élément de freinage (22) relié au bras (25) par des moyens de liaison élastiquement déformables (33), l'élément intermédiaire (34) venant en prise avec l'élément de fixation (16) dans ladite position intermédiaire sans limiter le mouvement de l'élément de freinage (22) le long de ladite trajectoire.

2. Roulette selon la revendication 1 comportant en outre des moyens de réglage (32) destinés à permettre de régler la position de l'élément de freinage par rapport aux moyens d'actionnement.

3. Roulette selon l'une quelconque des revendications 1 ou 2, comportant en outre un mécanisme (27,28) relié entre le corps (12) et le bras (25), le mécanisme étant dans un état sélectionné de "frein serré", dans lequel le mécanisme et le bras maintiennent l'élément de freinage en relation de freinage avec la roue, ou de "frein desserré", dans lequel le mécanisme et le bras permettent à l'élément de freinage de quitter la relation de freinage avec la roue.

4. Roulette selon l'une quelconque des revendications précédentes, dans laquelle l'élément intermédiaire (34) possède une rangée courbe de dents (37) et l'élément de fixation (16) possède une ou plusieurs dents (36) pouvant être engagées avec les dents de la rangée courbe lorsque l'élément intermédiaire est dans la position intermédiaire.

5. Roulette selon l'une quelconque des revendications précédentes, dans laquelle l'élément intermédiaire (34) est élastiquement flexible par rapport au corps.

6. Roulette selon l'une quelconque des revendications précédentes, dans laquelle l'élément intermédiaire (34) est fixé sur le corps (12) dans une position espacée de l'axe de pivotement (20) dans une direction et possède des dents (37) espacées de l'axe de pivotement dans une direction opposée.
